# EUROPEAN PATENT APPLICATION

(11) **EP 4 494 998 A1**
(43) Date of publication of application: **22.01.2025**
(21) Application number: 22932363.9
(22) Date of filing: 17.03.2022
(51) Int. Cl.: B63H 21/17, B63J 3/04, F01D 15/10, H01M 8/02, H01M 8/086, H01M 8/14, H01M 8/22, B63H 21/00, B63J 2/12

(54) **HYBRID PROPULSION VESSEL HAVING FUEL CELL AND HYBRID PROPULSION DEVICE**

(71) Applicant: Dsec Co., Ltd., Busan 48934 (KR)
(72) Inventor: OH, Dong Hyun, Busan 46232 (KR)
(74) Representative: Vossius & Partner Patentanwälte Rechtsanwälte mbB
(86) International application number: PCT/KR2022/003719
(87) International publication number: WO 2023/176996

(57) **Abstract**

Provided is a hybrid propulsion vessel that may be environmentally friendly and propelled with high efficiency by utilizing both electric power and heat, two energy forms generated in a fuel cell simultaneously, and by obtaining propulsive force as a propeller is rotated by any one or both of a steam turbine power source driven by heat as a primary power source and an electric motor power source driven by electric power as a secondary power source.

## Description

### Technical Field

The present disclosure relates to a hybrid propulsion vessel that obtains propulsive force as a propeller is rotated by any one or both of a steam turbine power source driven by heat produced by a fuel cell part as a primary power source and an electric motor power source driven by electric power produced by the fuel cell part as a secondary power source.

### Background Art

Generally, most vessels transporting cargo or passengers for commercial use obtain propulsive force by rotation of a propeller, and a large vessel uses an internal combustion engine to obtain rotational force of a propeller in general.

Recently, according to strengthened environmental regulations by the International Maritime Organization (IMO), demands for environmentally friendly vessels with reduced emissions of greenhouse gas, including pollutants such as sulfur oxide (SOx) and nitrogen oxide (NOx), are rising.

As one field of environmentally friendly vessels, research is actively conducted on a vessel using an electric motor to obtain rotational force of a propeller and using a fuel cell to obtain electric power required for the electric motor.

The fuel cell is an electrochemical device for directly converting chemical energy that hydrogen and oxygen have into electric energy and a new power generation technology for conversely using a chemical reaction of decomposing water into hydrogen and oxygen by applying currents and combining hydrogen and oxygen to generate water and produce currents. The hydrogen required for this chemical reaction is supplied in various manners.

Although in a different technical field, the fuel cell is already widely supplied to land vehicles.

Fuel cell automobiles use a polymer electrolyte membrane fuel cell (PEMFC) as the fuel cell.

The PEMFC is small in size, thus having high mobility, and operates at a low temperature of 100 degrees Celsius (°C) or less, thus having an advantage with respect to cooling ability.

Meanwhile, unlike land vehicles, an ocean going vessel requires high output for propulsion and has relatively enough space to spare, and thus it is advantageous to use a large-scale molten carbonate fuel cell (MCFC) or solid oxide fuel cell (SOFC).

During an electrochemical reaction of a fuel cell, the energy of hydrogen is transformed to electric energy and heat energy forms, and it is difficult for the power conversion efficiency of currently developed fuel cells to exceed 55 percent (%) in practice, and thus, the fuel cell generates electric energy and simultaneously generates an equal level of heat energy.

An existing fuel cell power plant running on land supplies heat energy generated from fuel cells in a cogeneration manner to surrounding areas as a form of heating.

However, since ocean going vessels are isolated afloat and cannot supply heat energy to the outside, in a related art regarding a vessel using a fuel cell, the heat energy generated from fuel cell operation is utilized restrictively to vaporize and heat low temperature liquid fuel or to reform fuel for hydrogen extraction, which leads to extremely low availability, and since accumulated heat rather lowers fuel cell efficiency, a cooling device for dissipating the generated heat is needed in order to maintain an optimal temperature of the fuel cell.

In another related art, waste heat is recovered and utilized for secondary generation using a gas turbine or a steam turbine, but energy loss is necessarily generated while converting heat energy into kinetic energy and reproducing electric power.

In sum, the related arts may not diverge from a stereotype of a land vehicle driving manner in which, in a vessel equipped with a fuel cell, the fuel cell is used merely for producing electric power and an electric motor alone is used for propulsion of the vessel, and a vessel that obtains propulsive force directly using heat generated in a fuel cell has never been suggested.

### Detailed Description of the Invention

### Technical Goals

The present disclosure is to provide a hybrid propulsion vessel that may be environmentally friendly and propelled with high efficiency by utilizing both electric power and heat, two energy forms generated in a fuel cell simultaneously, and by obtaining propulsive force as a propeller is rotated by any one or both of a steam turbine power source driven by heat as a primary power source and an electric motor power source driven by electric power as a secondary power source.

### Technical solutions

According to an aspect of the present disclosure, there is provided a vessel that obtains propulsive force by rotation of a propeller, the vessel including a fuel cell part including a fuel cell configured to be supplied with fuel to produce electric power and heat, an electric power storage device configured to be supplied with and suitable to store the electric power produced in the fuel cell part, and a hybrid propulsion device including a steam turbine power source configured to generate rotational force for rotating the propeller by steam generated using the heat produced in the fuel cell part, an electric motor power source configured to generate rotational force for rotating the propeller by the electric power supplied from the fuel cell part or the electric power storage device, and a power source combining shaft combined with the steam turbine power source and the electric motor power source and the propeller and configured to transfer the rotational force of the steam turbine power source and the rotational force of the electric motor power source to the propeller.

Preferably, the steam turbine power source may include a steam turbine for power configured to generate rotational force by steam and a reduction gear part configured to decelerate and output the rotational force of the steam turbine for power, and the vessel may include a clutch part to transfer rotational force between the power source combining shaft and the propeller or to block transferring rotational force.

Preferably, the vessel may further include a heat exchanger configured to change fresh water into steam by the heat produced in the fuel cell part to supply the steam to the steam turbine for power, a condenser configured to be supplied with and condense the steam passing through the steam turbine for power into fresh water, and a pump configured to supply the fresh water of the condenser to the heat exchanger.

Preferably, the vessel may further include a steam turbine for generation arranged between the steam turbine for power and the condenser and configured to generate rotational force by the steam passing through the steam turbine for power and a turbine generator configured to produce electric power using the rotational force of the steam turbine for generation.

Preferably, the vessel may further include a power distribution controller electrically connected to the fuel cell part and the electric power storage device and the electric motor power source and the turbine generator and configured to change and control a power distribution path depending on an electric power load.

Preferably, the electric motor power source may be usable as a regenerative generator suitable to produce electric power as the rotational force of the steam turbine power source is inputted via the power source combining shaft.

The fuel cell may be a phosphoric acid fuel cell (PAFC) that produces electric power and heat through an electrochemical reaction between hydrogen included in fuel and oxygen in atmosphere or a molten carbonate fuel cell (MCFC) or a solid oxide fuel cell (SOFC), and the fuel cell may use hydrogen gas or liquefied petroleum gas or natural gas or ethylene or methane or methanol or ammonia as fuel, and a single fuel cell or a plurality of fuel cells connected in series or parallel may produce electric power and heat in the fuel cell part.

### Effects of the Invention

According to the present disclosure, it is possible to provide a hybrid propulsion vessel that may be environmentally friendly and propelled with high efficiency by utilizing both electric power and heat, two energy forms generated in a fuel cell simultaneously.

In addition, according to the present disclosure, by being propelled using electric power and heat produced in a fuel cell, it is possible to reduce emissions of pollutants such as sulfur oxide and nitrogen oxide, compared to an internal combustion engine vessel propelled through fuel combustion, it is also possible to achieve higher efficiency and fuel efficiency than an electric propulsion vessel using electric power alone generated in a fuel cell, thereby decreasing a scale of a fuel cell to be mounted in a vessel.

In addition, according to the present disclosure, compared to a maximum 55 % or less power conversion efficiency of an existing general fuel cell, a heat conversion efficiency generated in a fuel cell operating at high temperature may reach 50 %, and in consideration thereof, by using power conversion and heat conversion together as in the present disclosure, it is expected to be possible to obtain energy conversion efficiency close to a maximum 90 % efficiency.

### Brief Description of Drawings

FIG. 1 is a schematic view of a hybrid propulsion vessel according to an example embodiment of the present disclosure.
FIGS. 2 to 6 are diagrams illustrating various operating configurations of FIG. 1.

### Mode for Carrying Out the Invention

Hereinafter, example embodiments of the present disclosure will be described in detail with reference to the accompanying drawings so that those of ordinary skill in the art to which the present disclosure pertains may easily implement them. However, the present disclosure may be implemented in multiple different forms and is not limited to the example embodiments described herein. Further, elements not related to descriptions of the present disclosure are omitted from the drawings for clear description, and like reference numerals are assigned to like elements throughout the specification.

Throughout the specification, when a part is described as "comprising or including" a component, it does not exclude another component but may further include another component unless otherwise stated.

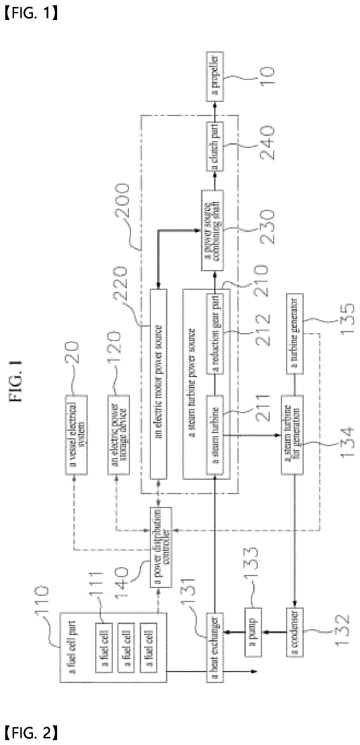

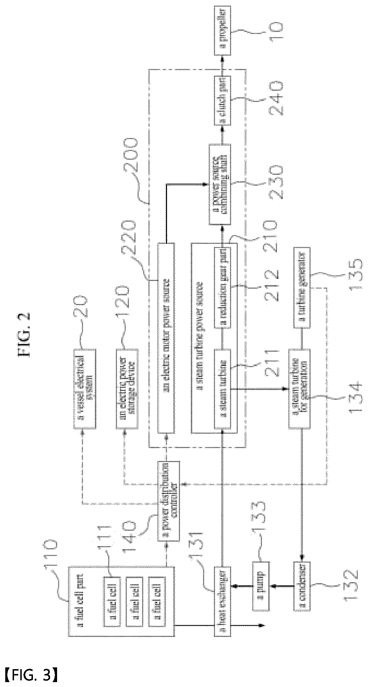

FIG. 1 is a schematic view of a hybrid propulsion vessel according to an example embodiment of the present disclosure, and FIGS. 2 to 6 are diagrams illustrating various operating configurations of FIG. 1.

The hybrid propulsion vessel according to an example embodiment of the present disclosure relates to a vessel that obtains propulsive force by rotation of a propeller 10.

The vessel is provided with a fuel cell part 110 as an energy source production part.

The fuel cell part 110 includes a fuel cell 111 configured to be supplied with fuel to produce electric power and heat.

The fuel cell part 110 may produce electric power and heat as a single fuel cell 111 or may produce electric power and heat as an assembly of a plurality of fuel cells 111 connected in series or parallel or in series and parallel.

The fuel cell 111 may use hydrogen gas or liquefied petroleum gas or natural gas or ethylene or methane or methanol or ammonia as fuel.

Preferably, the fuel cell 111 may be a phosphoric acid fuel cell (PAFC) that produces electric power through an electrochemical reaction between hydrogen included in fuel and oxygen in the atmosphere and simultaneously produces high-temperature heat or a molten carbonate fuel cell (MCFC) or a solid oxide fuel cell (SOFC).

The PAFC operates at a high temperature of about 200 °C, the MCFC operates at a high temperature of about 700 °C, and the SOFC operates at a high temperature of about 700 °C to 1000 °C.

As such, the PAFC or the MCFC or the SOFC may obtain high power conversion efficiency although a large space is needed and furthermore is a suitable fuel cell to implement the present disclosure in that high-temperature heat energy is generated due to a demanded high operating temperature.

An electric power storage device 120 is for storing electric power and may store electric power produced in the fuel cell part 110 or the like, in particular.

In the example embodiment, a hybrid propulsion device 200 is provided as a driving source for rotating the propeller 10.

The hybrid propulsion device 200 includes a steam turbine power source 210 as a main power source and an electric motor power source 220 as an auxiliary power source and a power source combining shaft 230 that transfers rotational force thereof to the propeller 10.

The steam turbine power source 210 is a driving source that generates rotational force by steam generated using the heat produced in the fuel cell part 110.

The steam turbine power source 210 in the example embodiment includes a steam turbine 211 for power that generates rotational force by steam and a reduction gear part 212 that decelerates and outputs rotational force of the steam turbine 211 for power.

The reduction gear part 212 converts high-speed rotational force of the steam turbine 211 for power into low-speed rotational force with high torque and then outputs.

The electric motor power source 220 is a driving source that generates rotational force by the electric power supplied from the fuel cell part 110, the electric power storage device 120, and the like.

Meanwhile, in some cases, the electric motor power source 220 may be used as a regenerative generator that may produce electric power as the rotational force of the steam turbine power source 210 is inputted via the power source combining shaft 230.

Generally, an electric motor refers to a device that changes electric energy into mechanical energy using force that a current-carrying conductor receives within a magnetic field, and a generator refers to a device that obtains electric energy from mechanical energy or the like.

Therefore, the electric motor, when mechanical energy is inputted from outside, may be used as a regenerative generator producing electric energy, and since this technology is a general technology, detailed descriptions are omitted.

The power source combining shaft 230 is connected to the steam turbine power source 210 and the electric motor power source 220 and the propeller 10 and transfers any one or both of the rotational force of the steam turbine power source 210 and the rotational force of the electric motor power source 220 to the propeller 10.

In some example embodiments, the power source combining shaft 230 may be arranged independently of the steam turbine power source 210 and the electric motor power source 220 and be combined detachably with each of the steam turbine power source 210 and the electric motor power source 220 and may be connected to any one or both of the steam turbine power source 210 and the electric motor power source 220.

In some example embodiments, the power source combining shaft 230 may be an output shaft of the reduction gear part 212 (in other words, the power source combining shaft 230 is a part of the reduction gear part 212), and in this case, an output shaft of the electric motor power source 220 may be directly connected to the power source combining shaft 230 (the output shaft of the reduction gear part 212).\

A clutch part 240 may be arranged between the power source combining shaft 230 and the propeller 10 to transfer rotational force to the propeller 10 or to block transferring rotational force to the propeller 10.

A configuration for utilizing heat produced in the fuel cell part 110 is described in more detail.

The steam turbine 211 for power utilizes heat produced in the fuel cell part 110 by a steam-powered cycle that generates power using steam.

The steam-powered cycle in the example embodiment is a steam cycle consisting of the steam turbine 211 for power, a steam turbine 134 for generation, a condenser 132, a pump 133, a heat exchanger 131 (corresponding to a kind of boiler), and the steam turbine 211 for power which are connected sequentially.

The heat exchanger 131 changes fresh water into high-temperature and high-pressure steam using the heat (waste heat) produced in the fuel cell part 110 (through heat exchange with the heat released from the fuel cell part 110) and supplies the steam to the steam turbine 211 for power.

The steam turbine 211 for power generates rotational force by high-temperature and high-pressure steam, and the high-temperature and high-pressure steam is released as high-temperature and low-pressure steam.

The high-temperature and low-pressure steam is supplied to the steam turbine 134 for generation to generate rotational force, and a turbine generator 135 connected to the steam turbine 134 for generation produces electric power using the rotational force of the steam turbine 134 for generation.

The steam passing through the steam turbine 134 for generation is supplied to the condenser 132 and condensed into fresh water, and the fresh water of the condenser 132 is supplied to the heat exchanger 131 by the pump 133.

In the example embodiment, electric power production is conducted in the fuel cell part 110 and the turbine generator 135, and the electric motor power source 220 is an electric power load or a place (when used as a regenerative generator) for producing electric power, and the electric power storage device 120 may store electric power or may supply the stored electric power to the outside.

In addition, a vessel electrical system 20 indicating various electrical devices in a vessel is an electric power load.

A power distribution controller 140 is arranged to change and control a power distribution path in order to suitably produce electric power depending on various electric power loads and suitably supply electric power for a required electric power load.

The power distribution controller 140 is electrically connected to the fuel cell part 110 and the electric power storage device 120 and the electric motor power source 220 and the turbine generator 135 in order to change a power distribution path and is further electrically connected to the vessel electrical system 20 indicating various electrical devices in a vessel.

The electric power produced in the fuel cell part 110 or the turbine generator 135 or the electric motor power source 220 (when used as a regenerative generator) may be supplied to the vessel electrical system 20 or the electric power storage device 120 or the electric motor power source 220 through the power distribution controller 140.

In other words, the power distribution controller 140 controls electric power production in fuel cell part 110 and changes a power distribution path depending on the electric power load of the vessel electrical system 20 or the electric power storage device 120 or the electric motor power source 220.

In particular, the power distribution controller 140 may optimally combine driving forces of the steam turbine 211 for power and the electric motor power source 220 and draw maximum efficiency by controlling driving the fuel cell part 110 according to electric power required for the vessel electrical system 20 and driving force required for vessel propulsion.

Various operating configurations of the vessel are described with reference to FIGS. 2 to 6.

### First operating configuration:

An operating configuration for driving both the steam turbine power source 210 and the electric motor power source 220 by heat and electric power generated in the fuel cell part 110 is described with reference to FIG. 2.

The high-temperature heat generated in the fuel cell part 110 is released through the heat exchanger 131, and steam into which fresh water is converted in the heat exchanger 131 is condensed in the condenser 132 after passing through the steam turbine 211 for power and the steam turbine 134 for generation and is supplied to the heat exchanger 131 by the pump 133, which forms a steam-powered cycle, by which the steam turbine power source 210 operates as a main power source, and the rotational force of the steam turbine power source 210 is transferred to the power source combining shaft 230 through the reduction gear part 212.

The electric power generated in the fuel cell part 110 and the electric power generated in the turbine generator 135 drive the electric motor power source 220 via the power distribution controller 140, and the electric motor power source 220 operates as an auxiliary power source and the rotational force generated in the electric motor power source 220 is transferred to the power source combining shaft 230 and overlapped with the rotational force of the steam turbine power source 210 and then outputted to the propeller 10 via the clutch part 240, which, accordingly, propels the vessel.

The electric power generated in the fuel cell part 110 and the turbine generator 135 is not only supplied to the electric motor power source 220 through the power distribution controller 140 but also supplied to the vessel electrical system 20 indicating various electrical devices in the vessel, and when surplus power is generated despite such electric power supply, supplied to and stored in the electric power storage device 120.

### Second operating configuration:

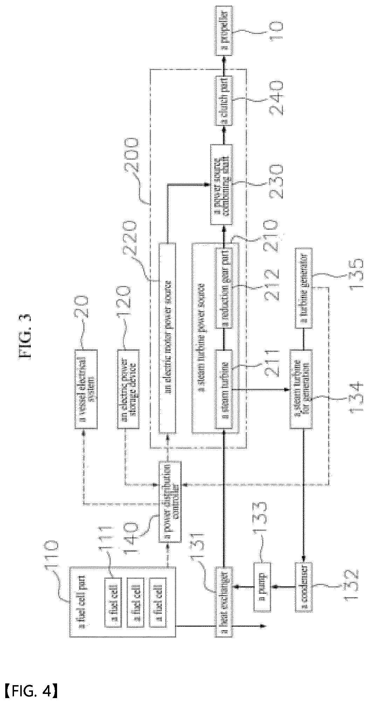

An operating configuration for driving both the steam turbine power source 210 and the electric motor power source 220 by heat and electric power generated in the fuel cell part 110 and electric power supplied from the electric power storage device 120 is described with reference to FIG. 3.

FIG. 3 is mostly identical to FIG. 2, and however, FIG. 3 shows a situation where heat and electric power alone generated in the fuel cell part 110 is not enough for vessel propulsion, and thus, unlike FIG. 2, electric power stored in the electric power storage device 120 is additionally supplied to the electric motor power source 220 via the power distribution controller 140 to generate hull propulsive force.

### Third operating configuration:

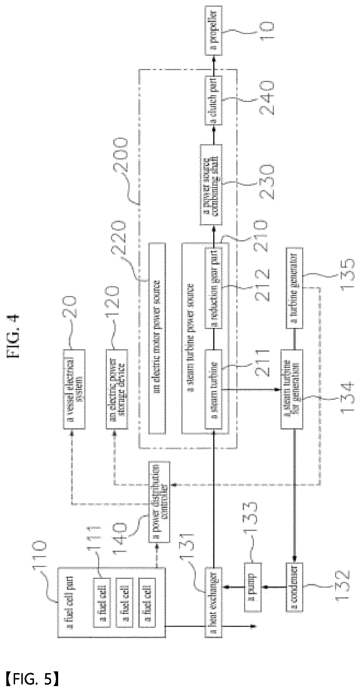

An operating configuration for driving the steam turbine power source 210 alone by heat generated in the fuel cell part 110 is described with reference to FIG. 4.

FIG. 4 shows a situation where enough driving force required for hull propulsion may be obtained by the steam turbine power source 210 alone, and thus the electric motor power source 220 is not driven.

The electric power generated in the fuel cell part 110 and the turbine generator 135 is supplied to the vessel electrical system 20 through the power distribution controller 140 while most surplus power is supplied to and stored in the electric power storage device 120.

### Fourth operating configuration:

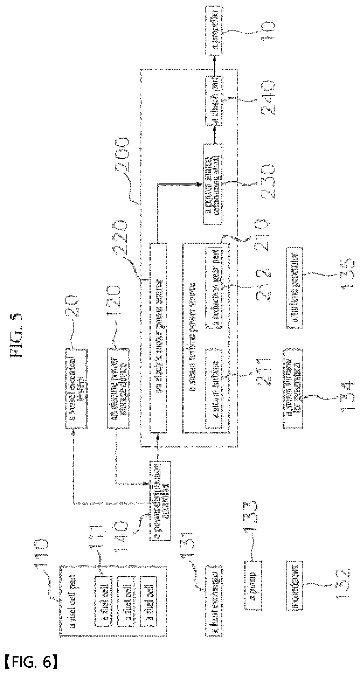

An operating configuration for not operating the fuel cell part 110 is described with reference to FIG. 5.

In other words, electric power and heat are not generated in the fuel cell part 110, and accordingly the steam turbine 211 for power is not driven.

In FIG. 5, electric power stored in the electric power storage device 120 is supplied to the electric motor power source 220 and the vessel electrical system 20 via the power distribution controller 140, and the electric motor power source 220 operates alone as a power source and the electric motor power source 220 rotates the propeller 10 via the power source combining shaft 230 and the clutch part 240, which propels the vessel.

### Fifth operating configuration:

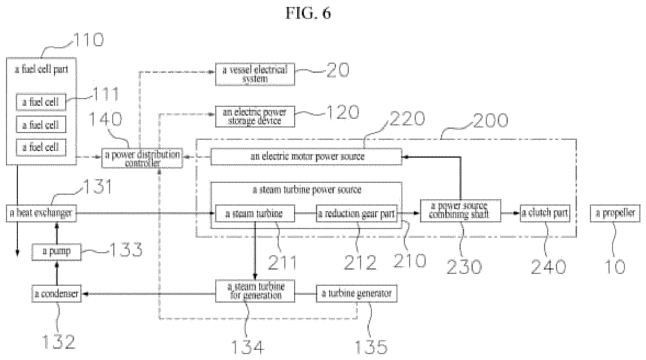

A situation (a situation where propulsive force is not required) where the fuel cell part 110 operates but a hull maintains a state of not accelerating is described with reference to FIG. 6.

In FIG. 6, electric power is generated in the electric motor power source 220 using rotational force of the steam turbine power source 210.

While high-temperature heat generated in the fuel cell part 110 is released through the heat exchanger 131, which operates the steam turbine power source 210, the clutch part 240 blocks transferring rotational force to the propeller 10, and the rotational force of the steam turbine power source 210 is transferred to the electric motor power source 220 through the reduction gear part 212 and the power source combining shaft 230, and in this case, the electric motor power source 220 functions as a regenerative generator producing electric power.

The electric power generated in the fuel cell part 110, electric power generated in the turbine generator 135, and electric power generated in the electric motor power source 220 is partly supplied to the vessel electrical system 20 and mostly supplied to and stored in the electric power storage device 120 as surplus power.

The descriptions of the present disclosure described above are examples, and it will be apparent to those of ordinary skill in the art to which the present disclosure pertains that modifications may be easily made in other specific forms without changing the technical spirit and essential features of the present disclosure. Therefore, the example embodiments described above are exemplary in every aspect and not to be construed as limited. For example, each element described as a single form may be implemented as distributed, and similarly, elements described as distributed may be implemented as a combined form.

The scope of the present disclosure is represented by the claims described later rather than the detailed description above, and all changes or modifications derived from the meaning and scope of the claims and the equivalent concepts are to be construed as included within the scope of the present disclosure.

### Industrial Applicability

The present disclosure may be used for a vessel that obtains propulsive force by rotation of a propeller, and particularly, may be used for a hybrid propulsion vessel that obtains propulsive force as a propeller is rotated by any one or both of a steam turbine power source driven by heat produced by a fuel cell part as a primary power source and an electric motor power source driven by electric power produced by the fuel cell part as a secondary power source.

## Claims

1. A vessel that obtains propulsive force by rotation of a propeller, the vessel comprising:
a fuel cell part including a fuel cell configured to be supplied with fuel to produce electric power and heat;
an electric power storage device configured to be supplied with and suitable to store the electric power produced in the fuel cell part; and
a hybrid propulsion device including a steam turbine power source configured to generate rotational force for rotating the propeller by steam generated using the heat produced in the fuel cell part, an electric motor power source configured to generate rotational force for rotating the propeller by the electric power supplied from the fuel cell part or the electric power storage device, and a power source combining shaft combined with the steam turbine power source, the electric motor power source and the propeller and configured to transfer the rotational force of the steam turbine power source and the rotational force of the electric motor power source to the propeller.

2. The vessel of claim 1:
wherein the steam turbine power source includes a steam turbine for power configured to generate rotational force by steam and a reduction gear part configured to decelerate and output the rotational force of the steam turbine for power; and
wherein the vessel comprises a clutch part to transfer rotational force between the power source combining shaft and the propeller or to block transferring rotational force.

3. The vessel of claim 2,
further comprising a heat exchanger configured to change fresh water into steam by the heat produced in the fuel cell part to supply the steam to the steam turbine for power, a condenser configured to be supplied with and condense the steam passing through the steam turbine for power into fresh water, and a pump configured to supply the fresh water of the condenser to the heat exchanger.

4. The vessel of claim 3,
further comprising a steam turbine for generation arranged between the steam turbine for power and the condenser and configured to generate rotational force by the steam passing through the steam turbine for power and a turbine generator configured to produce electric power using the rotational force of the steam turbine for generation.

5. The vessel of claim 4,
further comprising a power distribution controller electrically connected to the fuel cell part, the electric power storage device, the electric motor power source and the turbine generator and configured to change and control a power distribution path depending on an electric power load.

6. The vessel of claim 2,
wherein the electric motor power source is usable as a regenerative generator suitable to produce electric power as the rotational force of the steam turbine power source is inputted via the power source combining shaft.

7. The vessel of claim 1:
wherein the fuel cell is a phosphoric acid fuel cell (PAFC) that produces electric power and heat through an electrochemical reaction between hydrogen included in fuel and oxygen in atmosphere or a molten carbonate fuel cell (MCFC) or a solid oxide fuel cell (SOFC); wherein the fuel cell uses hydrogen gas or liquefied petroleum gas or natural gas or ethylene or methane or methanol or ammonia as fuel; and wherein a single fuel cell or a plurality of fuel cells connected in series or parallel produce electric power and heat in the fuel cell part.
